# EUROPÄISCHE PATENTSCHRIFT

(11) **EP 2 584 249 B1**
(45) Veröffentlichungstag und Bekanntmachung des Hinweises auf die Patenterteilung: **16.08.2017**
(21) Anmeldenummer: 11185375.0
(22) Anmeldetag: 17.10.2011
(51) Int. Cl.: F21S 8/10, F21V 8/00, G02B 6/00

(54) **Lichtleiter und Kraftfahrzeugleuchte**
Light guide and motor vehicle light
Conducteur lumineux et lampe de véhicule automobile

(43) Veröffentlichungstag der Anmeldung: 24.04.2013
(73) Patentinhaber: odelo GmbH, 70329 Stuttgart (DE)
(72) Erfinder: Bisch, Valentin, 70186 Stuttgart (DE)
(74) Vertreter: Benninger, Johannes

(56) Entgegenhaltungen:
- EP-A2- 2 048 430
- DE-A1- 10 032 927
- DE-A1- 10 135 478
- DE-A1-102004 054 732
- DE-A1-102007 057 941
- DE-A1-102008 021 290

## Beschreibung

Die Erfindung betrifft einen Lichtleiter gemäß dem Oberbegriff des Anspruchs 1 sowie eine mit einem solchen Lichtleiter ausgestattete Kraftfahrzeugleuchte gemäß dem Oberbegriff des Anspruchs 2.

Eine Kraftfahrzeugleuchte umfasst im Wesentlichen einen von einem Leuchtengehäuse und einer Lichtscheibe umschlossenen Leuchteninnenraum und mindestens ein darin beherbergtes Leuchtmittel für wenigstens eine Lichtfunktion der Kraftfahrzeugleuchte. In dem Leuchteninnenraum kann mindestens ein hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Wenigstens einer Lichtquelle des Leuchtmittels können ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

Die Lichtscheibe ist durch eine transparente Abdeckung gebildet, welche den Leuchteninnenraum sowie die von diesem beherbergten Bauteile gegen Witterungseinflüsse schützt.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Leuchtenkammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere oder alle Leuchtenkammern gleiche oder jede Leuchtenkammer eine andere Lichtfunktionen erfüllen kann.

Bei einer Lichtfunktion handelt es sich dabei um eine zur Erfüllung einer Aufgabe vorgesehene Funktion der Kraftfahrzeugleuchte. Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Schlusslicht- oder Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Ein Leuchtmittel für wenigstens eine Lichtfunktion umfasst zumindest wenigstens eine Lichtquelle, beispielsweise mindestens eine Glühlampe oder mindestens eine Gasentladungslampe oder mindestens eine Leuchtdiode sowie gegebenenfalls Kombinationen hiervon.

Beispielsweise kommen als Lichtquellen von Leuchtmitteln für Kraftfahrzeugleuchten unter anderem wegen ihres geringen Stromverbrauchs vermehrt Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln Kraftfahrzeugleuchten verwirklicht werden, die an fast jede nur erdenkliche Einbausituation angepasst sein können.

Eine typische Anpassung an die Einbausituation betrifft die äußere Gestalt der Kraftfahrzeugleuchte. Diese äußere Gestalt der Kraftfahrzeugleuchte ist beispielsweise durch die gestalterische Formgebung eines Kraftfahrzeugs sowie durch die vorgesehene Kontur der Kraftfahrzeugleuchte vorgegeben und spiegelt sich im so genannten Strakverlauf der Kraftfahrzeugleuchte wider.

Eine weitere typische Anpassung einer Kraftfahrzeugleuchte an die Einbausituation betrifft den zur Verfügung stehenden Bauraum. Dabei wird ein möglichst geringer Bauraumbedarf angestrebt, beispielsweise um bei einer Ausgestaltung einer Kraftfahrzeugleuchte als Heckleuchte mehr Platz für den Kofferraum eines Kraftfahrzeugs zur Verfügung zu haben und um gleichzeitig Material und Gewicht zu sparen, wodurch beispielsweise Energieeinsparungen, wie etwa Verbrauchseinsparungen von Treibstoff oder einer geringeren Belastung eines Stromspeichers einhergehend mit einer Verringerung der Umweltbelastung sowohl bei der Herstellung, als auch im Betrieb des Kraftfahrzeugs erreicht werden können.

Neben der Anpassung an die Einbausituation müssen Kraftfahrzeugleuchten sehr hohe Qualitätsanforderungen erfüllen. So werden beispielsweise bereits geringe Abweichungen von einem homogenen Eindruck des Erscheinungsbilds sowohl im ausgeschalteten Zustand des Leuchtmittels, dem so genannten Kaltzustand, wie beispielsweise ein dunkel erscheinendes Lampenloch, als auch im so genannten Warmzustand bei eingeschaltetem Leuchtmittel, wie beispielsweise hinsichtlich der Ausleuchtung einer Leuchtenkammer und/oder eines Reflektors, und/oder ein möglicherweise blendender direkter Blick des Betrachters auf die Lichtquelle eines Leuchtmittels, als qualitätsmindernd angesehen..

Um den hohen Qualitätsanforderungen an Kraftfahrzeugleuchten gerecht zu werden, ist es deshalb ein Ziel bei der Entwicklung von Kraftfahrzeugleuchten, das oder die Lichtquellen einer oder mehrerer Lichtfunktionen einer Kraftfahrzeugleuchte vor dem direkten Blick eines Betrachters zu verbergen.

Um eine oder mehrere, ihr Licht in einen oder mehrere Reflektoren strahlende Lichtquellen eines Leuchtmittels dem Blick des Betrachters zu entziehen, welches Licht mittels Reflexion an entsprechenden Formen bzw. Reflektorstrukturen auf dem Reflektor, wie etwa Kissen, Walzen, etc., in die gewünschte Richtung gelenkt wird, ist bekannt, die Lichtquelle beispielsweise oberhalb oder unterhalb des Reflektors oder neben diesem anzuordnen und das von ihr abgestrahlte Licht seitlich in einen Reflektor einzustrahlen. Hierdurch ist die Lichtquelle für den Betrachter beim direkten Blick aus normaler Richtung, wie dies der Sicht eines anderen Verkehrsteilnehmers bei in ein Kraftfahrzeug eingebautem Zustand entspricht, auf die Kraftfahrzeugleuchte nicht erkennbar. Diese wird erst sichtbar, sobald der Betrachter von oben oder unten her in die Kraftfahrzeugleuchte blickt. Da dies tatsächlich eher selten vorkommt, können Lichtquellen auf diese Art gut verborgen werden und der Reflektor weitestgehend lampenlochfrei gehalten werden.

Aufgrund der meist starken Strakverläufe ist es jedoch nicht immer möglich die Lichtquellen in einer lichttechnisch günstigen Lage, wie etwa direkt abstrahlend oder von oben oder unten her in den Reflektor einstrahlend einzubinden. Zum anderen kann hierdurch unabhängig vom Strakverlauf nicht vollständig sichergestellt werden, dass dadurch ein direkter Blick auf die Lichtquelle von außen durch die Lichtscheibe hindurch vollständig verwehrt ist.

So kommt es insbesondere bei starken Strakverläufen vor, dass die Lichtquellen bei der Betrachtung von außerhalb der Kraftfahrzeugleuchte durch die Lichtscheibe hindurch teilweise sichtbar sind. Eine zumindest aus einigen Blickwinkeln von außerhalb der Kraftfahrzeugleuchte durch die Lichtscheibe hindurch sichtbare Lichtquelle eines zur Erfüllung einer Lichtfunktion vorgesehenen Leuchtmittels wird als störend und den Qualitätseindruck nachhaltig negativ beeinflussend empfundenen.

Ein vollständiges Verbergen der Lichtquellen ist erst z. B. mittels auch als Lichtleiter bezeichneter, totalreflektierender (TIR; Total Internal Reflection), lichtleitender Elemente mit einem Lichteinkoppelbereich und einem Lichtauskoppelbereich möglich, die das in sie am Lichteinkoppelbereich eingekoppelte Licht von einer verborgen angeordneten Lichtquelle in Richtung Auskoppelbereich leiten und dort wieder auskoppeln. Das ausgekoppelte Licht kann dabei direkt, ohne einen Reflektor in der gewünschten Richtung abgestrahlt werden, oder indirekt, indem es in einen Reflektor eingestrahlt wird, der es dann in die gewünschte Richtung reflektiert.

Bei einer Kraftfahrzeugleuchte können ein oder mehrere Lichtleiter vorgesehen sein, beispielsweise um eine gewünschte Lichtverteilung z.B. über die Lichtscheibe hinweg des von einer oder mehreren Lichtquellen ausgestrahlten Lichts zu erhalten.

Ein Lichtleiter, in den Licht mindestens einer Lichtquelle an mindestens einer Lichteinkoppelfläche wenigstens eines Lichteinkoppelbereichs ein- und an mindestens einer von der Lichteinkoppelfläche verschiedenen Lichtauskoppelfläche zumindest eines Lichtauskoppelbereichs wieder ausgekoppelt wird, kann dabei als ein separates Bauteil im Leuchteninnenraum beherbergt oder Teil eines Leuchtmittels sein.

Beispielsweise kann ein Leuchtmittel einen oder mehrere Lichtleiter sowie eine oder mehrere, das von ihnen ausgestrahlte Licht zumindest zum Teil in den wenigstens einen Lichtleiter einkoppelnde Lichtquellen umfassen. Ein Lichtleiter eines solchen Leuchtmittels kann beispielsweise als Primäroptik einer oder mehrerer LEDs dienen bzw. als eine solche Primäroptik ausgebildet sein.

Der Lichtleiter kann beispielsweise stabförmig als so genannter Stablichtleiter und/oder flächig als so genannter Flächenlichtleiter ausgebildet sein, mit einer auf seiner beispielsweise normal zur Hauptabstrahlrichtung einer Kraftfahrzeugleuchte orientierten Vorderseite angeordneten Lichtauskoppelfläche.

Nachteilig an Lichtleitern ist, dass ein insbesondere einem starken Strakverlauf angepasster Lichtleiter eine inhomogene Ausleuchtung durch das in ihn eingekoppelte Licht erfährt, was wiederum als qualitätsmindernd empfunden wird. Zur Erfüllung der hohen Qualitätsanforderungen wird deshalb eine möglichst homogene Leuchtdichteverteilung entlang des Lichtleiters angestrebt.

Der oder die Lichtleiter sind dabei oft so im Leuchteninnenraum angeordnet, dass zumindest im Warmzustand ein frei schwebender Eindruck entsteht.

Zur Anordnung von Lichtleitern im Leuchteninnenraum ist bekannt, den Lichtleiter entlang dessen Erstreckung mittels Halteelementen, wie etwa Rastverbindungen, Ösen, Klemmen, Hintergreifungen etc. im Leuchteninnenraum einer Kraftfahrzeugleuchte zu befestigen.

Nachteilig hieran ist, dass dadurch die auch als Propagation bezeichnete Lichtausbreitung im Lichtleiter gestört wird, wodurch es zu einer unerwünschten, ungerichteten Lichtauskopplung im Bereich der Halteelemente kommt.

Um diesem Nachteil zu begegnen ist bekannt, ein Halteelement über die gesamte Länge des Lichtleiters vorzusehen oder bewusst sichtbare Halteelemente beispielsweise in Form von Haltestegen vorzusehen, oder den Lichtleiter bewusst sichtbar zu fassen. Ein dadurch nicht zu behebender Nachteil ist, dass zur Kompensation unerwünschter Streuverluste an den Halteelementen lichtstärkere Lichtquellen zur Lichteinkopplung bzw. -einspeisung in den Lichtleiter verwendet werden müssen.

Darüber hinaus weist auch ein mindestens eine Lichteinkoppelfläche umfassender Lichteinkoppelbereich eines Lichtleiters häufig eine inhomogene Ausleuchtung und damit ein nicht zufrieden stellendes Erscheinungsbild auf.

Dies ist dadurch beding, dass punktförmige Lichtquellen, wie beispielsweise LEDs, eine bestimmte Wegstrecke zur für ein homogenes Erscheinungsbild notwendigen Lichtausbreitung benötigen.

Wegen der oft engen Bauraumsituation in Fahrzeugleuchten ist diese Wegstrecke aber oft nicht gegeben, die zur einer optimalen Lichtausbreitung notwendig wäre. So zeigt der Einkoppelbereich oft störende Spots und ungewollte Flammbereiche.

Um dieses Problem zu umgehen ist bekannt, den Einkoppelbereich hinter einer Abdeckblende zu kaschieren. Dies ist allerdings nur unter bestimmten Voraussetzungen der Gestaltung einer mit einem solchen Lichtleiter versehenen Leuchte, insbesondere Kraftfahrzeugleuchte, möglich.

Außerdem kommt es bei langen und dünnen Lichtleitern mit Längen von beispielsweise über 500 mm und Durchmesser bzw. Querschnittsabmessungen von beispielsweise 5 mm und weniger zu einem sichtbaren Leuchtdichtegradienten mit zunehmender Weglänge der Lichtausbreitung im Lichtleiter, verbunden mit einer nicht zufrieden stellenden, inhomogenen Ausleuchtung und einem damit nicht zufrieden stellenden Erscheinungsbild.

Dies kann bei günstiger Straklage durch eine beidseitige Einkopplung zumindest zum Teil kompensiert werden.

Durch DE 10 2010 001 266 A1 ist bekannt, mehrere plattenförmige Lichtleiterelemente parallel zueinander aufeinander liegend anzuordnen. Jedes Lichtleiterelement weist eine durch eine gegenüberliegende Plattenseiten eines Lichtleiterelements miteinander verbindende Stirnseite gebildete Lichteinkoppelfläche auf. Die Lichteinkoppelflächen mehrerer Lichtleiterelemente sind einer gemeinsamen Lichtquelle zugeordnet. Die Lichtleiterelemente weisen jeweils eine parallel zur durch die jeweilige Platte gebildeten Ebene liegende Lichtauskoppelfläche auf. Die Lichtleiterelemente weisen eine gemeinsame Vorzugsrichtung der Lichtauskopplung normal zu den parallel liegenden Lichtauskoppelflächen auf. Durch eine entsprechende Ausgestaltung der Lichtauskopplung kann dadurch ein homogenes Erscheinungsbild des Stapels aus mehreren Lichtleiterelementen aus Richtung entgegen der Lichtauskoppelrichtung betrachtet erhalten werden. Die Lichtauskoppelflächen der einzelnen Platten müssen dabei aus Richtung entgegen der Lichtauskoppelrichtung betrachtet nicht deckungsgleich angeordnet sein, sondern können beispielsweise nur aneinander angrenzen. Dadurch ist jedes Lichtleiterelement für eine von mehreren aneinander angrenzenden Partien der Lichtabstrahlung des Stapels aus mehreren Lichtleiterelementen verantwortlich. Ebenso ist denkbar, dass jede Lichtauskoppelfläche jeder Platte die gesamte Fläche des Stapels einnimmt.

Durch DE 199 43 255 A1 ist zur bauraumsparenden Ausgestaltung einer Kraftfahrzeugleuchte bekannt, Licht in einen Lichtleiter mittels eines Lichteinkopplungselements einzukoppeln. Das Lichteinkopplungselement kann als mit einer Lichtquelle gekoppelter Lichtleiter ausgebildet sein. Zwischen dem als Lichtleiter ausgeführten Lichteinkopplungselement und dem Lichtleiter ist ein einstückig mit dem Lichtleiter ausgeführtes Lichtumlenkelement angeordnet, welches das quer zum Lichtleiter im Lichteinkopplungselement propagierte Licht in Erstreckungsrichtung des Lichtleiters in diesen umlenkt. Das Lichteinkopplungselement erstreckt sich dabei quer zum Lichtleiter. Die Maßnahme trägt nichts zum Erhalt einer homogenen Ausleuchtung des Lichtleiters bei.

Durch DE 10 2008 021 290 A1 ist ein Lichtleiter umfassend einen zur Einkopplung von Licht einer Lichtquelle vorgesehenen Lichteinkoppelbereich mit einer Lichteinkoppelfläche, sowie einen zur Auskopplung eingekoppelten Lichts vorgesehenen Lichtauskoppelbereich mit einer von der Lichteinkoppelfläche verschiedenen Lichtauskoppelfläche bekannt. Der Lichtleiter weist ferner eine Auskoppellichtleiterpartie, eine hiervon beabstandete und sich über einen kurzen Abschnitt entlang der Auskoppellichtleiterpartie erstreckende Zuführungslichtleiterpartie, sowie eine die Auskoppellichtleiterpartie und die Zuführungslichtleiterpartie lichttechnisch wirksam miteinander verbindende Stegpartie auf, welche die Beabstandung entlang der Länge der Auskoppellichtleiterpartie zwischen dieser und der Zuführungslichtleiterpartie zumindest abschnittsweise überbrückt. Die Zuführungslichtleiterpartie umfasst den Lichteinkoppelbereich mit der Lichteinkoppelfläche des Lichtleiters. Die Auskoppellichtleiterpartie umfasst den Lichtauskoppelbereich mit der Lichtauskoppelfläche des Lichtleiters. Vermittels der durch die Stegpartie hergestellten lichttechnisch wirksamen Verbindung wird kontinuierlich über die ganze Länge der Auskoppellichtleiterpartie Licht aus der Zuführungslichtleiterpartie in die Auskoppellichtleiterpartie übergekoppelt.

Durch DE 10 2004 054 732 A1 ist ein Lichtleiter bekannt, der einen plattenförmigen Lichtauskoppelbereich mit einer Lichtauskoppelfläche und einen stabförmigen Lichteinkoppelbereich mit einer Lichteinkoppelfläche für eine Lichtquelle aufweist. Der Lichtleiter weist ferner eine Auskoppellichtleiterpartie und eine Zuführungslichtleiterpartie auf. Die Zuführungslichtleiterpartie umfasst den Lichteinkoppelbereich mit der Lichteinkoppelfläche des Lichtleiters. Die Auskoppellichtleiterpartie umfasst den Lichtauskoppelbereich mit der Lichtauskoppelfläche des Lichtleiters. Die Zuführungslichtleiterpartie erstreckt sich zumindest entlang der Länge der Auskoppellichtleiterpartie. Die Zuführungslichtleiterpartie schließt unmittelbar an eine Schmalseite des Lichtauskoppelbereichs an die Auskoppellichtleiterpartie an.

Durch DE 10 2007 057 941 A1 ist ein Lichtleiter mit einem zur Einkopplung von Licht einer Lichtquelle vorgesehenen Lichteinkoppelbereich mit einer Lichteinkoppelfläche, sowie einen zur Auskopplung eingekoppelten Lichts vorgesehenen Lichtauskoppelbereich mit einer von der Lichteinkoppelfläche verschiedenen Lichtauskoppelfläche bekannt. Der Lichtleiter weist ferner eine Auskoppellichtleiterpartie, eine hiervon beabstandete und sich zumindest entlang der Länge der Auskoppellichtleiterpartie erstreckende Zuführungslichtleiterpartie, sowie eine die Auskoppellichtleiterpartie und die Zuführungslichtleiterpartie lichttechnisch wirksam miteinander verbindende Stegpartie auf, welche die Beabstandung entlang der Länge der Auskoppellichtleiterpartie zwischen dieser und der Zuführungslichtleiterpartie zumindest abschnittsweise überbrückt. Die Zuführungslichtleiterpartie umfasst den Lichteinkoppelbereich mit der Lichteinkoppelfläche des Lichtleiters. Die Auskoppellichtleiterpartie umfasst den Lichtauskoppelbereich mit der Lichtauskoppelfläche des Lichtleiters. Vermittels der durch die Stegpartie zumindest entlang der Länge der Auskoppellichtleiterpartie hergestellten lichttechnisch wirksamen Verbindung wird kontinuierlich über die ganze Länge der Auskoppellichtleiterpartie Licht aus der Zuführungslichtleiterpartie in die Auskoppellichtleiterpartie übergekoppelt.

Durch DE 100 32 927 A1 ist ein Lichtleiter bekannt. Dieser verfügt über einen zur Einkopplung von Licht einer Lichtquelle vorgesehenen Lichteinkoppelbereich mit einer Lichteinkoppelfläche, sowie einen zur Auskopplung eingekoppelten Lichts vorgesehenen Lichtauskoppelbereich mit mehreren von der Lichteinkoppelfläche verschiedenen Lichtauskoppelflächen. Der Lichtleiter weist ferner eine Auskoppellichtleiterpartie, eine sich hieran unmittelbar anschließende und sich zumindest entlang der Länge der Auskoppellichtleiterpartie erstreckende Zuführungslichtleiterpartie mit einer die Auskoppellichtleiterpartie und die Zuführungslichtleiterpartie lichttechnisch wirksam miteinander verbindende Übertragungspartie auf. Die Dicke der Übertragungspartie ist dabei vergrößert. Von der Übertragungspartie beabstandet sind in der Auskoppellichtleiterpartie Reduzierungsstellen angeordnet, welche sich über einen Teil der Länge der Auskoppellichtleiterpartie erstrecken. Die Reduzierungsstellen begrenzen die Lichtzufuhr zu den Lichtauskoppelflächen derart, dass die Lichtintensität an den einzelnen Lichtauskoppelstellen austretenden Lichts unterschiedlich abgeschwächt ist. DE 101 35 478 A1 offenbart einen Lichtleiter umfassend eine Lichteinkoppelfläche, eine Lichtauskoppelfläche, sowie eine Auskoppellichtleiterpartie und eine sich entlang der Länge der Auskoppellichtleiterpartie erstreckende Zuführungslichtleiterpartie. Die dem Abstand der Lichtauskoppelfläche von der Zuführungslichtleiterpartie entsprechende Abmessung der Auskoppellichtleiterpartie kann variiert werden, um eine homogene Ausleuchtung zu erzielen,

Der Erfindung liegt die Aufgabe zu Grunde, einen Lichtleiter zu entwickeln, welcher bei einem beliebigen Strakverlauf eine verbesserte Homogenität der Ausleuchtung und damit seines Erscheinungsbilds aufweist sowie ferner eine Kraftfahrzeugleuchte zu entwickeln, welche an jede erdenkliche Einbausituation angepasst werden kann und dabei besonders hohen Qualitätsanforderungen gerecht wird.

Die Aufgabe wird gelöst mit den Merkmalen der unabhängigen Ansprüche.

Die Erfindung sieht demnach zur Lösung der Aufgabe unter gleichzeitiger Behebung der genannten Nachteile des Standes der Technik einen insbesondere zum Einbau in eine Kraftfahrzeugleuchte geeigneten Lichtleiter und eine mit einem solchen Lichtleiter ausgestattete Kraftfahrzeugleuchte vor.

Der Lichtleiter umfasst wenigstens einen zur Einkopplung von Licht mindestens einer Lichtquelle vorgesehenen Lichteinkoppelbereich mit mindestens einer Lichteinkoppelfläche, sowie zumindest einen zur Auskopplung des eingekoppelten Lichts vorgesehenen Lichtauskoppelbereich mit mindestens einer von der Lichteinkoppelfläche verschiedenen Lichtauskoppelfläche.

Der Lichtleiter umfasst eine beispielsweise an einen Strakverlauf einer Kraftfahrzeugleuchte angepasste Auskoppellichtleiterpartie, eine hiervon beabstandete und sich zumindest entlang der Länge der Auskoppellichtleiterpartie erstreckende Zuführungslichtleiterpartie, sowie mindestens eine die Auskoppellichtleiterpartie und die Zuführungslichtleiterpartie zumindest entlang der Länge der Auskoppellichtleiterpartie lichttechnisch wirksam miteinander verbindende und die Beabstandung entlang der Länge der Auskoppellichtleiterpartie zwischen dieser und der Zuführungslichtleiterpartie zumindest abschnittsweise überbrückende Stegpartie.

Wichtig ist hervorzuheben, dass es sich bei der Länge der Auskoppellichtleiterpartie um eine Erstreckung der Auskoppellichtleiterpartie quer zur Beabstandung zwischen Zuführungslichtleiterpartie und Auskoppellichtleiterpartie handelt. Vorzugsweise handelt es sich hierbei um die größte Erstreckung in einer Richtung.

Die Zuführungslichtleiterpartie, die Auskoppellichtleiterpartie und die mindestens eine die Zuführungslichtleiterpartie und die Auskoppellichtleiterpartie lichttechnisch wirksam miteinander verbindende Stegpartie sind einstückig vorzugsweise aus dem selben Material hergestellt. Die Einschränkung bezüglich des Materials ergibt sich daher, dass es grundsätzlich auch denkbar ist, dass die unterschiedlichen Partien des Lichtleiters in einem zwei- oder mehrstufigen Spritzgussverfahren aus verschiedenen Materialien hergestellt werden können. Die Stegpartie verbindet damit die Zuführungslichtleiterpartie und die Auskoppellichtleiterpartie nicht nur lichttechnisch wirksam, sondern auch mechanisch.

Die Zuführungslichtleiterpartie bildet oder umfasst mindestens einen Lichteinkoppelbereich des Lichtleiters. Mindestens eine Lichteinkoppelfläche zumindest eines Lichteinkoppelbereichs des Lichtleiters befindet sich somit in der Zuführungslichtleiterpartie.

Vorzugsweise bildet oder umfasst die Zuführungslichtleiterpartie den mindestens einen Lichteinkoppelbereich des Lichtleiters. Die mindestens eine Lichteinkoppelfläche des zumindest einen Lichteinkoppelbereichs des Lichtleiters befindet sich somit in der Zuführungslichtleiterpartie.

Die Auskoppellichtleiterpartie bildet oder umfasst den mindestens einen Lichtauskoppelbereich des Lichtleiters. Die mindestens eine Lichtauskoppelfläche des zumindest einen Lichtauskoppelbereichs befindet sich damit in der Auskoppellichtleiterpartie.

Die Lichteinkopplung in den Lichtleiter erfolgt vorzugsweise vollständig an der Zuführungslichtleiterpartie.

Die Auskoppellichtleiterpartie wird über ihre ganze Länge der vermittels der mindestens einen Stegpartie hergestellten lichttechnischen Anbindung kontinuierlich von Licht aus der Zuführungslichtleiterpartie gespeist.

Mit anderen Worten wird der Auskoppellichtleiterpartie in der sich entlang dieser erstrechenden Zuführungslichtleiterpartie propagiertes Licht vermittels der mindestens einen Stegpartie kontinuierlich über deren Länge zugeführt.

Besonders bevorzugt ist eine durchgehende Stegpartie vorgesehen, welche über die gesamte Länge zumindest der Auskoppellichtleiterpartie diese mit der Zuführungslichtleiterpartie lichttechnisch wirksam verbindet.

Durch eine Variation wenigstens einer Abmessung der Stegpartie, nämlich deren auch als Stegtiefe bezeichenbarer, einem zumindest lokalen Abstand zwischen der Zuführungslichtleiterpartie und der Auskoppellichtleiterpartie entsprechenden Abmessung wird die Lichtzuführung in die Auskoppellichtleiterpartie gesteuert.

Zusätzlich kann die Lichtzuführung in die Auskoppellichtleiterpartie gesteuert werden durch eine Variation deren auch als Stegbreite bezeichenbarer Abmessung quer zu einer zwischen der Zuführungslichtleiterpartie und der Auskoppellichtleiterpartie aufgespannten Fläche und/oder der Form und/oder der Anzahl und/oder der Abmessungen von an der Zuführungslichtleiterpartie angeordneten, in dieser propagiertes Licht via die Stegpartie in die Auskoppellichtleiterpartie umlenkenden Überkopplungsprismen.

Bevorzugt sind die Zuführungslichtleiterpartie und/oder die Stegpartie zur Befestigung des Lichtleiters beispielsweise in einem Leuchteninnenraum einer Kraftfahrzeugleuchte vorgesehen.

Der Lichtleiter kann mit seiner Zuführungslichtleiterpartie direkt mit einer oder mehreren Lichtquellen verbunden, beispielsweise an diese angespritzt sein. Lichteinkoppelfläche ist dabei jeweils die unmittelbar an eine Lichtquelle angrenzende Fläche des Zuführungslichtleiters.

Es können entlang der Zuführungslichtleiterpartie mehrere Lichtquellen beispielsweise in gleichmäßigen Abständen verteilt angeordnet sein.

Alternativ oder zusätzlich kann eine Lichteinkopplung an beiden Enden der Zuführungslichtleiterpartie vorgesehen sein.

Als Lichtquelle kommen beispielsweise eine oder mehrere Licht gleicher oder unterschiedlicher Farbe abstrahlende LEDs zum Einsatz. Bei der Verwendung verschiedenfarbiger LEDs können mehrere Lichtfunktionen vermittels ein und des selben Lichtleiters verwirklicht werden.

LEDs können zumindest annäherungsweise als Punktlichtquelle angesehen werden. Dies führt dazu, dass das Licht eines ausgelegten Lichtleiters weniger gestreut wird, als bei einer Lichtquelle in Form einer Glühlampe mit einer räumlich ausgedehnten Glühwendel. Hierdurch kann das Lichtleiterdesign exakter ausgeführt werden, wodurch darüber hinaus eine höhere Effizienz des optischen Systems erhalten wird.

Eine Kraftfahrzeugleuchte, für die einer oder mehrere zuvor erwähnte Lichtleiter vorgesehen sein können, weist einen von einem Leuchtengehäuse und einer Lichtscheibe umschlossenen Leuchteninnenraum auf. Der Leuchteninnenraum beherbergt mindestens ein Leuchtmittel mit mindestens einer Lichtquelle. In dem Leuchteninnenraum ist darüber hinaus mindestens ein Lichtleiter untergebracht, in den Licht mindestens einer Lichtquelle wenigstens eines Leuchtmittels an mindestens einer Lichteinkoppelfläche wenigstens eines Lichteinkoppelbereichs ein- und an mindestens einer von der Lichteinkoppelfläche verschiedenen Lichtauskoppelfläche zumindest eines Lichtauskoppelbereichs wieder ausgekoppelt wird. Der Lichtleiter kann dabei als ein separates Bauteil im Leuchteninnenraum beherbergt oder Teil eines Leuchtmittels sein.

Der Leuchteninnenraum kann darüber hinaus mindestens einen beim Blick von außerhalb der Kraftfahrzeugleuchte durch die Lichtscheibe hindurch hinter der Auskoppellichtleiterpartie des Lichtleiters angeordneten Reflektor aufweisen, welcher zumindest auf dessen der Lichtscheibe zugewandte Vorderseite gestrahltes Licht gemäß einer beispielsweise gesetzliche Vorgaben an die Lichtverteilung in eine oder mehrere Vorzugrichtungen und Leuchtdichte in dieser einen oder mehreren Vorzugsrichtungen erfüllenden, vorgegebenen Abstrahlcharakteristik reflektiert.

Die Zuführungslichtleiterpartie kann hinter einer in dem Leuchteninnenraum angeordneten Abdeckblende geführt und kaschiert sein. Die Abdeckblende unterteilt den Leuchteninnenraum in einen von außerhalb der Kraftfahrzeugleuchte durch die Lichtscheibe hindurch gesehen vor der Abdeckblende befindlichen sichtbaren Bereich und in einen von außerhalb der Kraftfahrzeugleuchte durch die Lichtscheibe hindurch gesehen hinter der Abdeckblende befindlichen, nicht sichtbaren bzw. nicht einsehbaren Bereich.

Ebenso kann die Stegpartie zumindest teilweise hinter der in dem Leuchteninnenraum angeordneten Abdeckblende geführt und kaschiert sein.

Die Abdeckblende weist vorzugsweise mindestens eine Aussparung auf, durch welche hindurch die mindestens eine Stegpartie zwischen der Zuführungslichtleiterpartie und der Auskoppellichtleiterpartie des Lichtleiters geführt ist. Die Abdeckblende kann hierbei zur einfachen Montage zwei- oder mehrteilig ausgeführt sein. Beispielsweise kann die Abdeckblende im Bereich der Aussparung geteilt sein.

Die Befestigung des Lichtleiters kann dabei zwischen Abdeckblende und einem Leuchtenbauteil hinter der Abdeckblende im von außerhalb der Kraftfahrzeug leuchte durch die Lichtscheibe hindurch nicht sichtbaren bzw. nicht einsehbaren Bereich erfolgen.

Vorzugsweise ist die mindestens eine ihr Licht in den Lichtleiter einkoppelnde Lichtquelle ebenfalls hinter der Abdeckblende angeordnet.

Als Lichtquelle kommen besonders bevorzugt beispielsweise eine oder mehrere Licht gleicher oder unterschiedlicher Farbe abstrahlende LEDs zum Einsatz.

Bei der Verwendung verschiedenfarbiger LEDs können mehrere Lichtfunktionen vermittels ein und des selben Lichtleiters verwirklicht werden. Hierdurch kann eine mit einem solchen Lichtleiter ausgestattete Kraftfahrzeugleuchte auch an extrem enge und kleine Bauräume angepasst werden.

LEDs weisen bei gleicher Lichtstärke einen im Vergleich zu anderen Lichtquellen geringeren Stromverbrauch auf. Hierdurch kann bei einer Verwendung des Lichtleiters beispielsweise in einer Kraftfahrzeugleuchte die Belastung eines zur Stromversorgung vorgesehenen Bordnetzes eines Kraftfahrzeugs verringert werden, einhergehend mit Einsparungen beim Energieverbrauch des Kraftfahrzeugs. Ferner weisen LEDs eine weit höhere Lebensdauer auf, als andere, zur Anwendung in einer Kraftfahrzeugleuchte in Frage kommende Lichtquellen. Durch die längere Lebensdauer wird unter Anderem durch die geringere Ausfallquote die Betriebssicherheit und damit einhergehend die Qualität der Kraftfahrzeugleuchte erhöht.

Zum Betrieb von LEDs als Lichtquellen für ein Leuchtmittel einer Kraftfahrzeugleuchte können eine oder mehrere mehr oder minder komplexe elektronische Steuerschaltungen vorgesehen sein, die beispielsweise auf einem oder mehreren Leuchtmittelträgern des Leuchtmittels angeordnet und in dem Leuchteninnenraum beherbergt sein können.

Ein einfaches Beispiel für eine elektronische Steuerschaltung betrifft die Angleichung unterschiedlicher Helligkeiten einzelner LEDs oder von LED-Strängen innerhalb einer Gruppe gemeinsam betriebener, auf einem oder mehreren Leuchtmittelträgern angeordneter LEDs. Eine solche elektronische Steuerschaltung besteht aus mindestens einem oder mehreren Vorwiderständen zur Anpassung der Vorwärtsspannung der LEDs an das Bordnetz. Beispielsweise ist bekannt, die LEDs im so genannten Binning nach Vorwärtsspannung und Intensität zu sortieren. Um Unterschiede zwischen mehreren LED-Strängen auszugleichen, die jeweils aus in Reihe geschalteten LEDs gleicher Vorwärtsspannung und Intensität bestehen, und um eine homogene Helligkeitsverteilung der benachbarten LED-Stränge aus LEDs mit unterschiedlicher Vorwärtsspannung und Intensität zu erhalten, wird zumindest jeder LED-Strang mit einem anderen Vorwiderstand versehen.

LEDs bedürfen darüber hinaus beim Einsatz als Lichtquelle insbesondere in Kraftfahrzeugleuchten oft einer separaten Ausfallerkennung. Dies ist bedingt durch die geringe Leistungsaufnahme von LEDs im Allgemeinen. Beispielsweise ist ein in einem Kraftfahrzeug untergebrachtes Steuergerät nicht in der Lage, eine dem Ausfall einer oder weniger LEDs entsprechende Änderung der Leistungsentnahme aus dem Bordnetz zu erkennen, da eine hieraus resultierende Bordnetzspannungsänderung unterhalb der im normalen Betrieb eines Kraftfahrzeugs auftretenden Bordnetzspannungssschwankung liegt. Eine beispielsweise in der Kraftfahrzeugleuchte untergebrachte elektronische Schaltungsanordnung zur Ausfallerkennung erfasst den Ausfall einer oder mehrerer Leuchtdioden in der Kraftfahrzeugleuchte z.B. mittels eines oder mehrerer Komparatoren und teilt dies dem Steuergerät mit. Diese elektronische Schaltungsanordnung zur Ausfallerkennung kann durch eine beispielsweise auf dem Leuchtmittelträger aufgebrachte elektronische Steuerschaltung verwirklicht sein.

Darüber hinaus können LEDs weiterer elektronischer Steuerschaltungen bedürfen. Beispiele hierfür sind elektronische Steuerschaltungen:
- zur Regelung und/oder Steuerung der Helligkeit bzw. Leuchtkraft der LEDs, beispielsweise durch eine pulsweitenmodulierte Taktung der Stromversorgung für einen außerhalb des für das menschliche Auge wahrnehmbaren Bereichs gepulsten Betrieb,
- zur Kompensation oder Vermeidung elektromagnetischer Störungen, beispielsweise aufgebaut aus Kondensatoren und/oder Ferriten,
- zum Schutz der LEDs z.B. vor einer Überspannung des Bordnetzes oder vor fehlerhafter Polung, beispielsweise umfassend eine oder mehrere Zenerdioden,

Zusammengefasst muss für fast alle LED-Anwendungen eine mehr oder minder umfangreiche, für die speziellen LEDs ausgelegte elektronische Steuerschaltung z.B. auf den mindestens einen Leuchtmittelträger aufgebracht werden. Die elektronische Steuerschaltung umfasst im einfachsten Fall einen Vorwiderstand und eine Schutzdiode, kann aber je nach Anwendung auch wesentlich mehr Elektronikbauteile enthalten, wie z.B. Mikrokontroller bzw. Kontroller, Komparatoren, Transistoren, Schutzdioden, elektrische Widerstände z.B. als Vorwiderstand, Kondensatoren, Ferrite, etc.

Somit kann eine Kraftfahrzeugleuchte mit einer oder mehreren LEDs als Lichtquelle zumindest ein oben genanntes Elektronikbauteil sowie mindestens eine LED umfassen. Demnach kann eine Kraftfahrzeugleuchte mit einer oder mehreren LEDs als Lichtquellen neben der LED zumindest noch über ein weiteres Elektronikbauelement verfügen.

Der Leuchteninnenraum der Kraftfahrzeugleuchte kann in eine oder mehrere, einer gemeinsamen und/oder verschiedenen Lichtfunktionen zugeordnete Leuchtenkammern unterteilt sein, von denen mindestens eine Leuchtenkammer wie zuvor beschrieben mit einem Lichtleiter mit einer Zuführungslichtleiterpartie und einer parallel zu dieser verlaufenden und mit dieser über mindestens eine Stegpartie lichttechnisch verbundenen Auskoppellichtleiterpartie ausgestattet ist.

Die Kraftfahrzeugleuchte kann beispielsweise als Heckleuchte für ein Kraftfahrzeug ausgebildet sein.

Es ist ersichtlich, dass die Erfindung in jedem Fall verwirklicht sein kann durch einen Lichtleiter mit einer Zuführungslichtleiterpartie, die sich zumindest über die gesamte Länge einer Auskoppellichtleiterpartie erstreckt, wobei die Zuführungslichtleiterpartie mit der Auskoppellichtleiterpartie über eine Stegpartie lichttechnisch verbunden ist. Über die Stegpartie wird Licht über die gesamte Länge der Auskoppellichtleiterpartie aus der Zuführungslichtleiterpartie in die Auskoppellichtleiterpartie übergekoppelt.

Vorteile gegenüber dem Stand der Technik ergeben sich unter anderem durch eine besonders homogene Leuchtdichteverteilung und homogene Ausleuchtung entlang des Auskoppellichtleiters einhergehend mit einem homogenen Erscheinungsbild.

Diese Vorteile werden unter Anderem dadurch erreicht, indem vermittels der in ihrer Länge und in ihren Abmessungen weitestgehend nur nach lichttechnischen Anforderungen beliebig ausführbaren Zuführungspartie eine homogene Verteilung des beispielsweise von einer oder mehreren LEDs als Lichtquelle eingekoppelten Lichts erhalten wird, welches durch die lichttechnische Verbindung in die Auskoppelpartie übergekoppelt wird und dort zu einer homogenen Ausleuchtung einhergehend mit einem homogenen, sehr hohen Qualitätsanforderungen genügenden Gesamteindruck führt.

Zusätzliche Vorteile gegenüber dem Stand der Technik ergeben sich dadurch, dass die Auskoppellichtleiterpartie vermittels der Zuführungslichtleiterpartie über die Stegpartie gehalten wird und keine störenden, zusätzlichen Halteelemente benötigt werden.

Des Weiteren sind wegen der kontinuierlichen Lichtzuführung sehr lange und auch dünne Lichtleiter mit einem geringen Leuchtdichtegradienten umsetzbar. Reicht dies nicht aus, kann mit weiteren Lichtquellen über Einkoppelgeometrien an der Zuführungslichtleiterpartie zusätzlich Licht in die Auskoppellichtleiterpartie eingebracht werden. Auch eine kreisförmige Ausführung kann so verwirklicht werden.

Zusätzliche Vorteile ergeben sich dadurch, dass im auch als Warmzustand bezeichneten eingeschalteten Zustand des Leuchtmittels ein direkter Blick auf die zur Erfüllung mindestens einer Lichtfunktion der Kraftfahrzeugleuchte vorgesehene mindestens eine Lichtquelle eines Leuchtmittels verhindert ist. Da die Lichteinspeisung über die Zuführungslichtleiterpartie erfolgt, gibt es in der zur sichtbaren Anordnung vorgesehenen Auskoppellichtleiterpartie keinen kritischen Einkoppelbereich hoher Lichtdichte der mit einer Blende kaschiert werden muss.

Weitere Vorteile ergeben sich durch einen geringen Bauraumbedarf aufgrund der Lichteinkopplung in die Zuführungslichtleiterpartie. In dieser kann sich das Licht so weit als nötig ausbreiten, bis eine homogene Ausleuchtung erreicht ist, da die durch die Stegpartie von der Auskoppellichtleiterpartie räumlich beabstandete Zuführungslichtleiterpartie nicht einsehbar angeordnet werden kann. Hierdurch kann auch der sich entlang derjenigen Wegstrecke erstreckende Teil der Zuführungslichtleiterpartie, welche Wegstrecke das Licht bis zum Erhalt einer homogenen Ausleuchtung benötigt, nicht als störend oder qualitätsmindernd empfunden werden.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: einen Querschnitt durch einen Lichtleiter mit einer hinter einer Abdeckblende angeordneten Zuführungslichtleiterpartie, einer vor der Abdeckblende angeordneten Auskoppellichtleiterpartie und einer die Zuführungslichtleiterpartie und Auskoppellichtleiterpartie miteinander mechanisch und lichttechnisch wirksam verbindenden, durch die Abdeckblende reichenden Stegpartie.
- Fig. 2: eine Seitenansicht eines Lichtleiters mit einer vermittels einer Stegpartie mechanisch und lichttechnisch mit einer Auskoppellichtleiterpartie verbundene Zuführungslichtleiterpartie gemäß einem ersten Ausführungsbeispiel.
- Fig. 3: eine Seitenansicht eines Lichtleiters mit einer vermittels einer Stegpartie mechanisch und lichttechnisch mit einer Auskoppellichtleiterpartie verbundene Zuführungslichtleiterpartie gemäß einem zweiten Ausführungsbeispiel.
- Fig. 4: eine Seitenansicht eines Lichtleiters mit einer vermittels einer Stegpartie mechanisch und lichttechnisch mit einer Auskoppellichtleiterpartie verbundene Zuführungslichtleiterpartie gemäß einem dritten Ausführungsbeispiel.
- Fig. 5: eine Seitenansicht eines Lichtleiters mit einer vermittels einer Stegpartie mechanisch und lichttechnisch mit einer Auskoppellichtleiterpartie verbundene Zuführungslichtleiterpartie gemäß einem vierten Ausführungsbeispiel.
- Fig. 6: eine Seitenansicht eines Lichtleiters mit einer vermittels einer Stegpartie mechanisch und lichttechnisch mit einer Auskoppellichtleiterpartie verbundene Zuführungslichtleiterpartie gemäß einem fünften Ausführungsbeispiel.
- Fig. 7: eine Seitenansicht eines Lichtleiters mit einer vermittels einer Stegpartie mechanisch und lichttechnisch mit einer Auskoppellichtleiterpartie verbundene Zuführungslichtleiterpartie gemäß einem sechsten Ausführungsbeispiel.
- Fig. 8: eine Draufsicht eines kreisringförmigen Lichtleiters mit einer vermittels einer Stegpartie mechanisch und lichttechnisch mit einer Auskoppellichtleiterpartie verbundene Zuführungslichtleiterpartie.

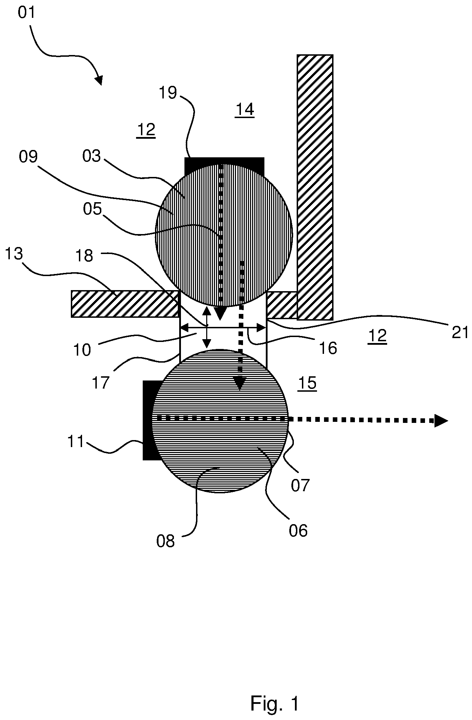

Ein in den Fig. 1 bis Fig. 8 ganz oder in Teilen dargestellter, beispielsweise zur Verwendung in einer als Heckleuchte ausgeführten Kraftfahrzeugleuchte vorgesehener Lichtleiter 01 weist wenigstens einen zur Einkopplung von Licht mindestens einer Lichtquelle 02 vorgesehenen Lichteinkoppelbereich 03 mit mindestens einer Lichteinkoppelfläche 04, sowie zumindest einen zur Auskopplung schematisch durch Pfeile angedeuteten eingekoppelten Lichts 05 vorgesehenen Lichtauskoppelbereich 06 mit mindestens einer von der Lichteinkoppelfläche 04 verschiedenen Lichtauskoppelfläche 07 auf.

Der Lichtleiter 01 umfasst eine beispielsweise an einen Strakverlauf einer Kraftfahrzeugleuchte angepasste Auskoppellichtleiterpartie 08, eine hiervon beabstandete und sich zumindest entlang der Länge der Auskoppellichtleiterpartie 08 erstreckende Zuführungslichtleiterpartie 09, sowie mindestens eine die Auskoppellichtleiterpartie 08 und die Zuführungslichtleiterpartie 09 zumindest entlang der Länge der Auskoppellichtleiterpartie 08 lichttechnisch wirksam miteinander verbindende Stegpartie 10.

Die Stegpartie 10 überbrückt die Beabstandung entlang der Länge der Auskoppellichtleiterpartie 08 zwischen dieser und der Zuführungslichtleiterpartie 09 zumindest abschnittsweise.

Die Auskoppellichtleiterpartie 08 umfasst den mindestens einen Lichtauskoppelbereich 06 mit der wenigstens einen Lichtauskoppelfläche 07 des Lichtleiters 01.

Die Zuführungslichtleiterpartie 09 umfasst mindestens einen Lichteinkoppelbereich 03 mit wenigstens einer Lichteinkoppelfläche 04 des Lichtleiters 01. Mindestens eine Lichteinkoppelfläche 04 zumindest eines Lichteinkoppelbereichs 03 des Lichtleiters 01 befindet sich somit in der Zuführungslichtleiterpartie 09.

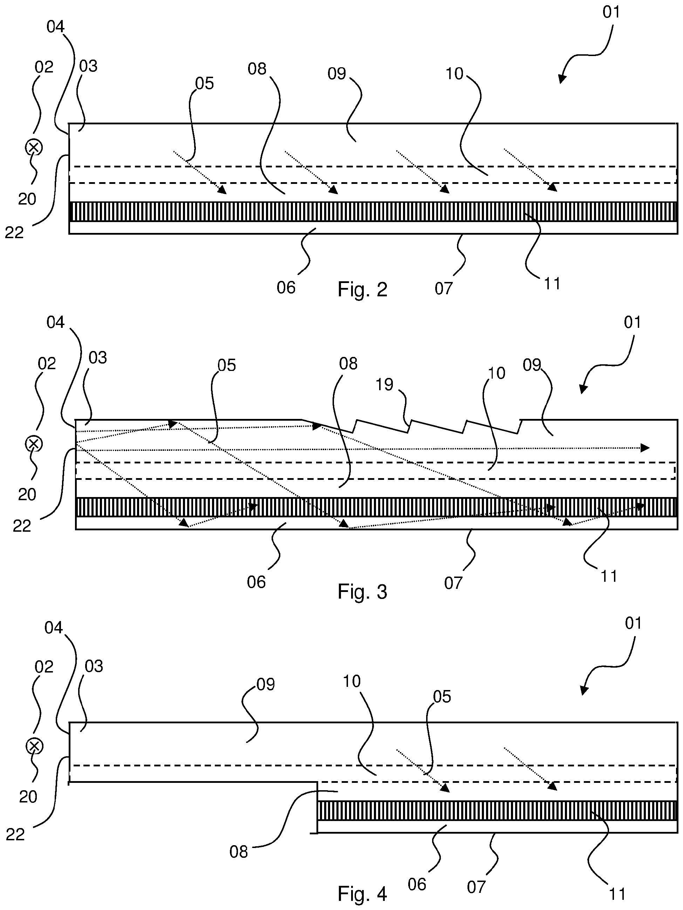

Vorzugsweise umfasst die Zuführungslichtleiterpartie 09 wie in Fig. 2, Fig. 3, Fig. 4, Fig. 5, Fig. 6 und Fig. 8 dargestellt den mindestens einen Lichteinkoppelbereich 03 des Lichtleiters 01. Die mindestens eine Lichteinkoppelfläche 04 des zumindest einen Lichteinkoppelbereichs 03 des Lichtleiters 01 befindet sich somit in der Zuführungslichtleiterpartie 09, so dass die Lichteinkopplung in den Lichtleiter 01 vollständig an der Zuführungslichtleiterpartie 09 erfolgt.

Die Auskoppellichtleiterpartie 08 wird über ihre ganze Länge vermittels der mindestens einen Stegpartie 10 hergestellten lichttechnischen Anbindung kontinuierlich von aus der Zuführungslichtleiterpartie 09 übergekoppeltem Licht 05 gespeist.

Hierzu wird vermittels der durch die mindestens eine Stegpartie 10 hergestellten lichttechnisch wirksamen Verbindung kontinuierlich über die ganze Länge der Auskoppellichtleiterpartie 09 Licht 05 aus der Zuführungslichtleiterpartie 08 in die Auskoppellichtleiterpartie 09 übergekoppelt.

Die Stegpartie 10 ist bevorzugt einstückig mit der Auskoppellichtleiterpartie 08 und der Zuführungslichtleiterpartie 09 verbunden, beispielsweise indem der Lichtleiter 01 in einem ein- oder mehrstufigen Spritzgussverfahren hergestellt ist. Die Stegpartie 10 verbindet die Zuführungslichtleiterpartie 09 und die Auskoppellichtleiterpartie 08 nicht nur lichttechnisch wirksam, sondern auch mechanisch. Die Zuführungslichtleiterpartie 09, die Auskoppellichtleiterpartie 08 und die einstückig mit diesen hergestellte mindestens eine Stegpartie 10 können aus dem selben Material bestehen oder in einem zwei- oder mehrstufigen Spritzgussverfahren aus verschiedenen Materialien hergestellt sein.

Die Auskoppellichtleiterpartie 08 kann wie in Fig. 1 bis Fig. 8 dargestellt mit einer beispielsweise Auskoppelprismen 11 umfassenden oder durch solche gebildeten Lichtauskoppelstruktur versehen sein. Durch die Auskoppelprismen 11 erfährt das in dem Lichtleiter 01 propagierte Licht 05 eine Umlenkung hin zu einer der mit den Auskoppelprismen 11 versehenen Seite gegenüberliegenden Lichtauskoppelfläche 07. Die Auskoppelprismen 11 lenken das im Lichtleiter 01 propagierte Licht 05, beispielsweise das in die Auskoppellichtleiterpartie 08 über deren Länge kontinuierlich via der Stegpartie 10 aus der Zuführungslichtleiterpartie 09 übergekoppelte Licht 05, in einer gewünschten Richtung der Lichtauskopplung um, unter der das Licht 05 unter Brechung an der Grenze bzw. am optischen Übergang des Materials der Auskoppellichtleiterpartie 08 zum den Lichtleiter 01 umgebenden Medium, typischerweise Luft, in einer gewünschten Richtung, beispielsweise einer Eingangs erwähnten Vorzugsrichtung, entsprechend einer gewünschten Abstrahlcharakteristik aus der Auskoppellichtleiterpartie 08 ausgekoppelt wird.

Die Auskoppellichtleiterpartie 08 und die Zuführungslichtleiterpartie 09 können parallel bzw. in gleichmäßigem Abstand zueinander verlaufen, wodurch der Auskoppellichtleiterpartie 08 parallel zu dieser in der mit dieser vermittels mindestens einer Stegpartie 10 lichttechnisch wirksam verbundenen, parallel verlaufenden Zuführungslichtleiterpartie 09 propagiertes Licht 05 kontinuierlich über deren Länge zugeführt wird.

Vorzugsweise ist wie in den Fig. 2 bis Fig. 8 dargestellt eine durchgehende Stegpartie 10 vorgesehen, welche über die gesamte Länge zumindest der Auskoppellichtleiterpartie 08 diese mit der Zuführungslichtleiterpartie 09 lichttechnisch wirksam verbindet. Alternativ können mehrere, beispielsweise in gleichmäßigen Abständen angeordnete zueinander unterbrochene Stegpartien 10 vorgesehen sein.

Eine Einstellung bzw. Steuerung der Lichtzuführung aus der Zuführungslichtleiterpartie 09 in die Auskoppellichtleiterpartie 08 kann wie in Fig. 1 dargestellt durch eine Variation der auch als Stegbreite bezeichenbaren Abmessung 16 der Stegpartie 10 quer zu einer zwischen der Zuführungslichtleiterpartie 09 und der Auskoppellichtleiterpartie 08 aufgespannten Fläche 17 erfolgen. Erfindungsgemäß erfolgt eine Einstellung bzw. Steuerung der Lichtzuführung aus der Zuführungslichtleiterpartie 09 in die Auskoppellichtleiterpartie 08 wie in Fig. 1 dargestellt durch eine Variation der auch als Stegtiefe bezeichenbaren, einem zumindest lokalen Abstand zwischen der Zuführungslichtleiterpartie 09 und der Auskoppellichtleiterpartie 08 entsprechenden Abmessung 18 der Stegpartie 10. Darüber hinaus ist eine Einstellung bzw. Steuerung der Lichtzuführung aus der Zuführungslichtleiterpartie 09 in die Auskoppellichtleiterpartie 08 wie in Fig. 1, Fig. 3, Fig. 6 und Fig. 7 dargestellt durch eine Variation der Form und/oder Anzahl und/oder Abmessungen von an der Zuführungslichtleiterpartie 09 angeordneten, in dieser propagiertes Licht 05 via die Stegpartie 10 in die Auskoppellichtleiterpartie 09 umlenkender Überkopplungsprismen 19 einer diese umfassenden oder durch solche gebildeten Lichtüberkoppelstruktur möglich.

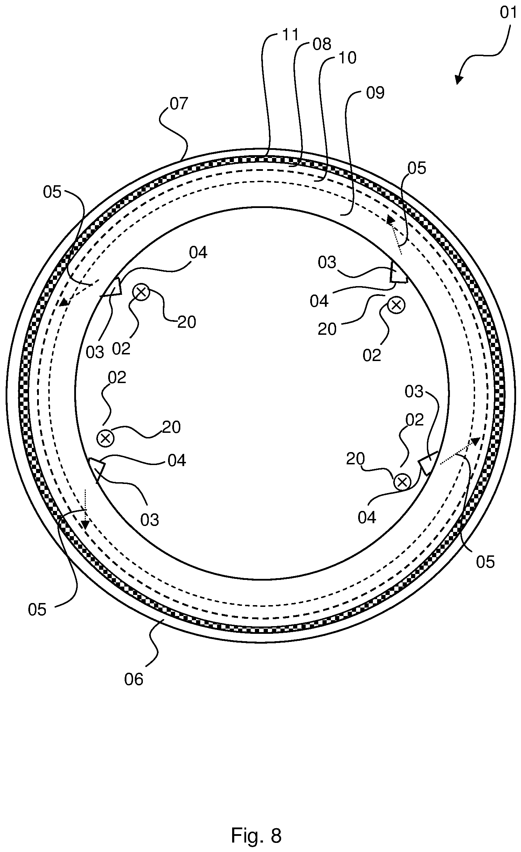

Entlang der Zuführungslichtleiterpartie 09 können wie in Fig. 8 am Beispiel eines kreisringförmigen Lichtleiters 01 dargestellt mehrere Lichtquellen 02 vorzugsweise in gleichmäßigen Abständen verteilt angeordnet sein.

Alternativ oder zusätzlich kann wie in Fig. 2, Fig. 3, Fig. 4 und Fig. 5 dargestellt eine Lichteinkopplung an einem Ende 22 der Zuführungslichtleiterpartie 09 vorgesehen sein.

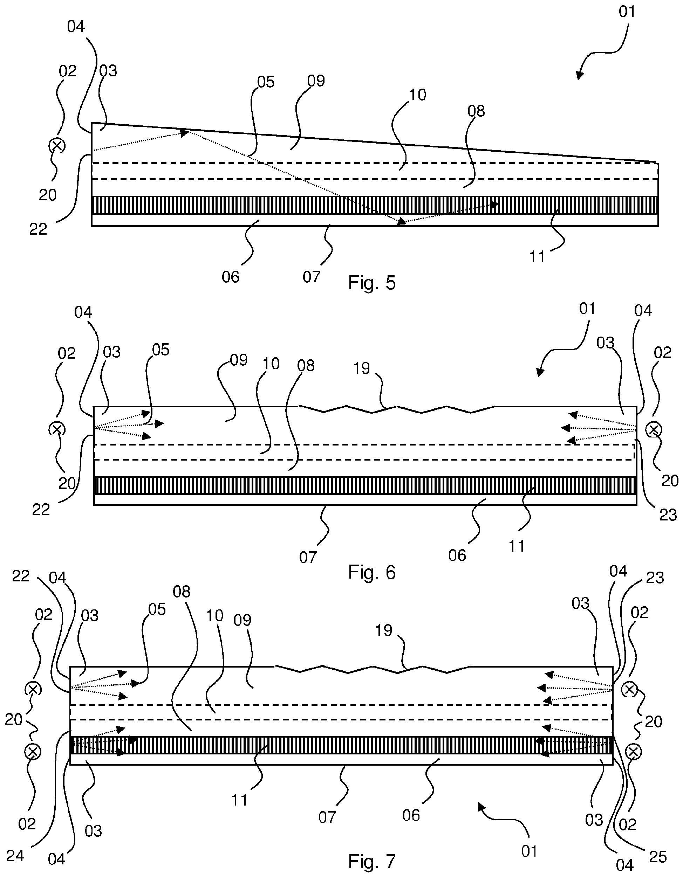

Ebenfalls alternativ oder zusätzlich zu einer Lichteinkopplung von mehreren, beispielsweise gleichmäßig über die Länge der Zuführungslichtleiterpartie 09 verteilt angeordneten Lichtquellen 02 kann wie in Fig. 6 und Fig. 7 dargestellt eine Lichteinkopplung an beiden Enden 22, 23 der Zuführungslichtleiterpartie 09 vorgesehen sein.

Darüber hinaus kann zusätzlich wie in Fig. 7 dargestellt eine Lichteinkopplung an mindestens einem der gegenüberliegenden Enden 24, 25 der Auskoppellichtleiterpartie 08 vorgesehen sein.

Der Lichtleiter 01 kann beispielsweise mit seiner Zuführungslichtleiterpartie 09 direkt mit einer oder mehreren Lichtquellen 02 verbunden sein, beispielsweise indem der Lichtleiter 01 an diese angespritzt ist. Jeweils eine unmittelbar an eine Lichtquelle 02 angrenzende Fläche des Lichtleiters 01 ist dabei Lichteinkoppelfläche 04.

Der Zuführungslichtleiter 09 erstreckt sich wie in den Fig. 2 bis Fig. 8 dargestellt zumindest entlang der gesamten Länge der Auskoppellichtleiterpartie 08.

Der Zuführungslichtleiter 09 kann dabei wie in den Fig. 2, Fig. 3, Fig. 5, Fig. 6, Fig. 7 und Fig. 8 dargestellt, so lang ausgeführt sein, wie die Auskoppellichtleiterpartie 08, oder wie in Fig. 4 dargestellt, die Auskoppellichtleiterpartie 08 überragen. Dies kann beispielsweise dienlich sein, um eine homogene Leuchtdichteverteilung des in der Zuführungslichtleiterpartie 09 im Lichtleiter 05 propagierten Lichts 05 zu erhalten, bevor dieses dann in die Auskoppellichtleiterpartie 08 übergekoppelt wird.

Die Zuführungslichtleiterpartie 09 kann wie in Fig. 2, Fig. 3, Fig. 4, Fig. 6, Fig. 7, Fig. 8 dargestellt über die Länge der Auskoppellichtleiterpartie 09 hinweg konstanten Querschnitt aufweisen. Alternativ kann die Zuführungslichtleiterpartie 09 wie in Fig. 5 dargestellt einen über die Länge der Auskoppellichtleiterpartie 09 hinweg veränderlichen, beispielsweise von der Lichtquelle 02 weg abnehmenden Querschnitt aufweisen.

Als Lichtquellen 02 kommen bevorzugt Licht gleicher oder unterschiedlicher Farbe abstrahlende LEDs 20 zum Einsatz. Bei mehreren ihr Licht in den Lichtleiter 01 einkoppelnden LEDs 20 unterschiedlicher Farbe als Lichtquellen 02 können mittels nur einen Lichtleiters 01 mehrere Lichtfunktionen einer Leuchte, beispielsweise einer Kraftfahrzeugleuchte erfüllt werden.

Zur in Fig. 1 angedeuteten Anordnung des Lichtleiters 01 in einer Leuchte, beispielsweise in einer Kraftfahrzeugleuchte, mit einem von einem Leuchtengehäuse und einer Lichtscheibe umschlossenen Leuchteninnenraum 12, welcher mindestens ein Leuchtmittel mit mindestens einer Lichtquelle 02 beherbergt, kann vorgesehen sein, dass die Zuführungslichtleiterpartie 09 hinter einer in dem Leuchteninnenraum 12 angeordneten Abdeckblende 13 geführt und kaschiert ist. Die Abdeckblende 13 kann den Leuchteninnenraum 12 in einen von außerhalb der Leuchte durch die Lichtscheibe hindurch gesehen vor der Abdeckblende 13 befindlichen sichtbaren bzw. einsehbaren Bereich 14 und in einen von außerhalb der Leuchte durch die Lichtscheibe hindurch gesehen hinter der Abdeckblende 13 befindlichen, nicht sichtbaren bzw. nicht einsehbaren Bereich 15 unterteilen.

Dabei kann die Zuführungslichtleiterpartie 09 und/oder die Stegpartie 10 zur Befestigung des Lichtleiters 01 beispielsweise in dem Leuchteninnenraum 12 vorgesehen sein.

Die Stegpartie 10 kann ebenfalls zumindest teilweise hinter der in dem Leuchteninnenraum 12 angeordneten Abdeckblende 13 geführt und kaschiert sein.

Der Lichtleiter 01 kann als ein separates Bauteil im Leuchteninnenraum 12 beherbergt oder Teil eines Leuchtmittels sein.

Die Abdeckblende 13 weist mindestens eine Aussparung 21 auf, durch welche hindurch die mindestens eine Stegpartie 10 zwischen der Zuführungslichtleiterpartie 09 und der Auskoppellichtleiterpartie 08 des Lichtleiters 01 geführt ist.

Die Abdeckblende 13 kann zur einfachen Montage zwei- oder mehrteilig ausgeführt sein, wobei die Abdeckblende vorzugsweise im Bereich der Aussparung 21 geteilt ist.

Die Befestigung des Lichtleiters 01 kann zwischen Abdeckblende 13 und einem Leuchtenbauteil hinter der Abdeckblende 13 im von außerhalb der Leuchte durch die Lichtscheibe hindurch nicht sichtbaren bzw. nicht einsehbaren Bereich 14 erfolgen.

Die mindestens eine ihr Licht in den Lichtleiter 01 einkoppelnde Lichtquelle 02 ist vorzugsweise ebenfalls hinter der Abdeckblende 13 angeordnet.

Wichtig ist hervorzuheben, dass der Leuchteninnenraum 12 einer zuvor beschriebenen Leuchte in eine oder mehrere Leuchtenkammern unterteilt sein kann, von denen zumindest eine Leuchtenkammer wie zuvor beschrieben mit einem Lichtleiter 01 mit einer Zuführungslichtleiterpartie 09 und einer beispielsweise parallel zu dieser verlaufenden und mit dieser über mindestens eine Stegpartie 10 lichttechnisch verbundenen Auskoppellichtleiterpartie 09 ausgestattet ist.

Die Leuchte kann beispielsweise als Kraftfahrzeugleuchte, insbesondere als Heckleuchte für ein Kraftfahrzeug ausgebildet sein.

Die Erfindung ist insbesondere im Bereich der Herstellung von Lichtleitern für Beleuchtungszwecke sowie für Kraftfahrzeugleuchten gewerblich anwendbar.

### Bezugszeichenliste

- 01: Lichtleiter
- 02: Lichtquelle
- 03: Lichteinkoppelbereich
- 04: Lichteinkoppelfläche
- 05: Licht
- 06: Lichtauskoppelbereich
- 07: Lichtauskoppelfläche
- 08: Auskoppellichtleiterpartie
- 09: Zuführungslichtleiterpartie
- 10: Stegpartie
- 11: Auskoppelprisma
- 12: Leuchteninnenraum
- 13: Abdeckblende
- 14: Bereich
- 15: Bereich
- 16: Abmessung
- 17: Fläche
- 18: Abmessung
- 19: Überkopplungsprisma
- 20: LED
- 21: Aussparung
- 22: Ende
- 23: Ende
- 24: Ende
- 25: Ende

## Patentansprüche

1. Lichtleiter (01) umfassend wenigstens einen zur Einkopplung von Licht (05) mindestens einer Lichtquelle (02) vorgesehenen Lichteinkoppelbereich (03) mit mindestens einer Lichteinkoppelfläche (04), sowie zumindest einen zur Auskopplung eingekoppelten Lichts (05) vorgesehenen Lichtauskoppelbereich (06) mit mindestens einer von der Lichteinkoppelfläche (04) verschiedenen Lichtauskoppelfläche (07), sowie ferner eine Auskoppellichtleiterpartie (08), eine hiervon beabstandete und sich zumindest entlang der Länge der Auskoppellichtleiterpartie (08) erstreckende Zuführungslichtleiterpartie (09), sowie mindestens eine die Auskoppellichtleiterpartie (08) und die Zuführungslichtleiterpartie (09) zumindest entlang der Länge der Auskoppellichtleiterpartie (08) lichttechnisch wirksam miteinander verbindende Stegpartie (10), welche die Beabstandung entlang der Länge der Auskoppellichtleiterpartie (08) zwischen dieser und der Zuführungslichtleiterpartie (09) zumindest abschnittsweise überbrückt, wobei die Zuführungslichtleiterpartie (09) mindestens einen Lichteinkoppelbereich (03) mit wenigstens einer Lichteinkoppelfläche (04) des Lichtleiters (01) umfasst und die Auskoppellichtleiterpartie (09) den mindestens einen Lichtauskoppelbereich (06) mit der wenigstens einen Lichtauskoppelfläche (07) des Lichtleiters (01) umfasst, und vermittels der durch die mindestens eine Stegpartie (10) hergestellten lichttechnisch wirksamen Verbindung kontinuierlich über die ganze Länge der Auskoppellichtleiterpartie (09) Licht (05) aus der Zuführungslichtleiterpartie (08) in die Auskoppellichtleiterpartie (09) übergekoppelt wird,
**gekennzeichnet durch**
eine Einstellung der Lichtzuführung aus der Zuführungslichtleiterpartie (09) in die Auskoppellichtleiterpartie (08) durch eine Variation:
- der einem zumindest lokalen Abstand zwischen der Zuführungslichtleiterpartie (09) und der Auskoppellichtleiterpartie (08) entsprechenden Abmessung (18) der Stegpartie (10).

2. Kraftfahrzeugleuchte mit einem von einem Leuchtengehäuse und einer Lichtscheibe umschlossenen Leuchteninnenraum (12), welcher mindestens ein Leuchtmittel mit mindestens einer Lichtquelle (02) beherbergt, wobei in dem Leuchteninnenraum mindestens ein Lichtleiter (01) untergebracht ist, in den Licht mindestens einer Lichtquelle (02) wenigstens eines Leuchtmittels an mindestens einer Lichteinkoppelfläche (04) wenigstens eines Lichteinkoppelbereichs (03) ein-und an mindestens einer von der Lichteinkoppelfläche (04) verschiedenen Lichtauskoppelfläche (07) zumindest eines Lichtauskoppelbereichs (06) wieder ausgekoppelt wird,
**gekennzeichnet durch**
einen Lichtleiter (01) nach Anspruch 1, wobei die Zuführungslichtleiterpartie (09) hinter einer in dem Leuchteninnenraum (12) angeordneten Abdeckblende (13) geführt und kaschiert ist, welche Abdeckblende (13) den Leuchteninnenraum (12) in einen von außerhalb der Kraftfahrzeugleuchte durch die Lichtscheibe hindurch gesehen vor der Abdeckblende (13) befindlichen einsehbaren Bereich (14) und in einen hinter der Abdeckblende (13) befindlichen, nicht einsehbaren Bereich (15) unterteilt.

3. Lichtleiter oder Kraftfahrzeugleuchte nach Anspruch 1 oder 2,
**dadurch gekennzeichnet,**
**dass** die Zuführungslichtleiterpartie (09), die Auskoppellichtleiterpartie (08) und die einstückig mit diesen hergestellte mindestens eine die Zuführungslichtleiterpartie (09) und die Auskoppellichtleiterpartie (08) lichttechnisch wirksam miteinander verbindende Stegpartie (10) aus dem selben Material bestehen oder in einem zwei- oder mehrstufigen Spritzgussverfahren aus verschiedenen Materialien hergestellt sind.

4. Lichtleiter oder Kraftfahrzeugleuchte nach einem der Ansprüche 1 bis 3, **gekennzeichnet durch**
eine durchgehende Stegpartie (10), welche über die gesamte Länge zumindest der Auskoppellichtleiterpartie (08) diese mit der Zuführungslichtleiterpartie (09) lichttechnisch wirksam verbindet.

5. Lichtleiter oder Kraftfahrzeugleuchte nach einem der vorhergehenden Ansprüche, **gekennzeichnet durch**
eine zusätzliche Einstellung der Lichtzuführung aus der Zuführungslichtleiterpartie (09) in die Auskoppellichtleiterpartie (08) durch eine Variation:
- der Abmessung (16) der Stegpartie (10) quer zu einer zwischen der Zuführungslichtleiterpartie (09) und der Auskoppellichtleiterpartie (08) aufgespannten Fläche (17), und/oder
- der Form und/oder Anzahl und/oder Abmessungen von an der Zuführungslichtleiterpartie (09) angeordneten, in dieser propagiertes Licht (05) via die Stegpartie (10) in die Auskoppellichtleiterpartie (08) umlenkender Überkopplungsprismen (19).

6. Lichtleiter oder Kraftfahrzeugleuchte nach einem der vorhergehenden Ansprüche,
**dadurch gekennzeichnet,**
**dass** die Zuführungslichtleiterpartie (09) und/oder die Stegpartie (10) zur Befestigung des Lichtleiters (01) vorgesehen sind.

7. Lichtleiter oder Kraftfahrzeugleuchte nach einem der vorhergehenden Ansprüche,
**dadurch gekennzeichnet,**
**dass** entlang der Zuführungslichtleiterpartie (09) mehrere Lichtquellen (02) vorzugsweise in gleichmäßigen Abständen verteilt angeordnet sind.

8. Lichtleiter oder Kraftfahrzeugleuchte nach einem der vorhergehenden Ansprüche, **gekennzeichnet durch**
eine Lichteinkopplung an mindestens einem der gegenüberliegenden Enden (22, 23) der Zuführungslichtleiterpartie (09) und/oder an mindestens einem der gegenüberliegenden Enden (24, 25) der Auskoppellichtleiterpartie (08).

9. Lichtleiter oder Kraftfahrzeugleuchte nach einem der vorhergehenden Ansprüche,
**dadurch gekennzeichnet,**
**dass** der Lichtleiter (01) direkt mit einer oder mehreren Lichtquellen (02) verbunden, vorzugsweise an diese angespritzt ist, wobei jeweils eine unmittelbar an eine Lichtquelle (02) angrenzende Fläche des Lichtleiters (01) Lichteinkoppelfläche (04) ist.

10. Lichtleiter oder Kraftfahrzeugleuchte nach einem der vorhergehenden Ansprüche, **gekennzeichnet durch**
Licht (05) gleicher oder unterschiedlicher Farbe abstrahlende LEDs (20) als Lichtquelle (02).

11. Kraftfahrzeugleuchte nach einem der Ansprüche 2 bis 10,
**dadurch gekennzeichnet, dass**:
- der Lichtleiter (01) als ein separates Bauteil im Leuchteninnenraum (12) beherbergt oder Teil eines Leuchtmittels ist, und/oder
- der Leuchteninnenraum (12) mindestens einen beim Blick von außerhalb der Kraftfahrzeugleuchte durch die Lichtscheibe hindurch hinter der Auskoppellichtleiterpartie (08) angeordneten Reflektor aufweist, und/oder
- die Stegpartie (10) zumindest teilweise hinter der in dem Leuchteninnenraum (12) angeordneten Abdeckblende (13) geführt und kaschiert ist, und/oder
- die Abdeckblende (13) mindestens eine Aussparung (21) aufweist, durch welche hindurch die mindestens eine Stegpartie (10) zwischen der Zuführungslichtleiterpartie (09) und der Auskoppellichtleiterpartie (08) des Lichtleiters (01) geführt ist, und/oder
- die Abdeckblende (13) zwei- oder mehrteilig ausgeführt ist, wobei die Abdeckblende (13) vorzugsweise im Bereich der Aussparung (21) geteilt ist, und/oder
- die Befestigung des Lichtleiters (01) zwischen Abdeckblende (13) und einem Leuchtenbauteil hinter der Abdeckblende (13) im von außerhalb der Kraftfahrzeugleuchte durch die Lichtscheibe hindurch nicht einsehbaren Bereich (15) erfolgt, und/oder
- die mindestens eine ihr Licht (05) in den Lichtleiter (01) einkoppelnde Lichtquelle (02) hinter der Abdeckblende (13) angeordnet ist, und/oder
- der Leuchteninnenraum (12) in eine oder mehrere, einer gemeinsamen und/oder verschiedenen Lichtfunktionen zugeordnete Leuchtenkammern unterteilt ist, von denen mindestens eine Leuchtenkammer mit einem Lichtleiter (01) mit einer Zuführungslichtleiterpartie (09) und einer parallel zu dieser verlaufenden und mit dieser über mindestens eine Stegpartie (10) lichttechnisch verbundenen Auskoppellichtleiterpartie (08) ausgestattet ist, und/oder
- die Kraftfahrzeugleuchte als Heckleuchte ausgebildet ist.

## Claims

1. A light guide (01) comprising at least one light in-coupling area (03) with at least one light in-coupling surface (04), the light in-coupling area (03) being provided for coupling in light (05) from at least one light source (02), as well as at least one light out-coupling area (06) with at least one light out-coupling surface (07) that is different from the light in-coupling surface (04), the light out-coupling area (06) being provided for coupling out light (05) that has been coupled in, as well as, moreover, an out-coupling section of the light guide (08), a supply section of the light guide (09) spaced apart from and extending at least along the length of said out-coupling section of the light guide (08), as well as at least one bridge section (10) connecting the out-coupling section of the light guide (08) and the supply section of the light guide (09) in a light-technically active manner to each other at least along the length of the out-coupling section of the light guide (08), which bridge section (10) bridges the spacing between the out-coupling section of the light guide (08) and the supply section of the light guide (09) at least in sections along the length of the out-coupling section of the light guide (08), wherein the supply section of the light guide (09) comprises at least one light in-coupling area (03) with at least one light in-coupling surface (04) of the light guide (01), and the out-coupling section of the light guide (09) comprises the at least one light out-coupling area (06) with the at least one light out-coupling surface (07) of the light guide (01), and light (05) is continuously trans-coupled from the supply section of the light guide (08) into the out-coupling section of the light guide (09) over the entire length of the out-coupling section of the light guide (09) by means of the light-technically active connection produced by the at least one bridge section (10),
**characterised by**
an adjustment of the light supply from the supply section of the light guide (09) into the out-coupling section of the light guide (08) by a variation:
- of the dimension (18) of the bridge section (10), which corresponds to an at least local space between the supply section of the light guide (09) and the out-coupling section of the light guide (08).

2. A motor vehicle lamp with a lamp interior (12) enclosed by a lamp housing and a light lens, which lamp interior (12) accommodates at least one lighting means with at least one light source (02), wherein at least one light guide (01) is accommodated in the lamp interior, into which light guide (01) light from at least one light source (02) of at least one lighting means is coupled in at at least one light in-coupling surface (04) of at least one light in-coupling area (03) and coupled out at at least one light out-coupling surface (07) of at least one light out-coupling area (06), with the light out-coupling surface (07) being different from the light in-coupling surface (04),
**characterised by**
a light guide (01) as recited in claim 1, wherein the supply section of the light guide (09) is guided and concealed behind a covering panel (13) arranged in the lamp interior (12), which covering panel (13) divides the lamp interior (12) into an area (14) that is visible from outside of the motor vehicle lamp and located in front of the covering panel (13) as seen through the light lens and an area (15) that is not visible and located behind the covering panel (13).

3. The light guide or motor vehicle lamp as recited in claim 1 or 2,
**characterised in that**
the supply section of the light guide (09), the out-coupling section of the light guide (08), and, produced in one piece with the said, the at least one bridge section (10), which connects the supply section of the light guide (09) and the out-coupling section of the light guide (08) in a light-technically active manner to each other, consist of the same material or are produced from different materials in a two- or multi-stage injection moulding process.

4. The light guide or motor vehicle lamp as recited in one of the claims 1 to 3,
**characterised by**
a continuous bridge section (10), which connects the out-coupling section of the light guide (08) to the supply section of the light guide (09) in a light-technically active manner over the entire length at least of the out-coupling section of the light guide (08).

5. The light guide or motor vehicle lamp as recited in one of the previous claims, **characterised by**
an additional adjustment of the light supply from the supply section of the light guide (09) into the out-coupling section of the light guide (08) by a variation:
- of the dimension (16) of the bridge section (10) transverse to a surface (17) spanned between the supply section of the light guide (09) and the out-coupling section of the light guide (08), and/or
- of the form and/or number and/or dimensions of trans-coupling prisms (19) arranged at the supply section of the light guide (09) and deflecting light (05) propagated in said supply section of the light guide (09) via the bridge section (10) into the out-coupling section of the light guide (08).

6. The light guide or motor vehicle lamp as recited in one of the previous claims,
**characterised in that**
the supply section of the light guide (09) and/or the bridge section (10) are provided for fastening the light guide (01).

7. The light guide or motor vehicle lamp as recited in one of the previous claims,
**characterised in that**
a plurality of light sources (02) are arranged to be distributed preferably at regular intervals along the supply section of the light guide (09).

8. The light guide or motor vehicle lamp as recited in one of the previous claims,
**characterised by**
an in-coupling of light at at least one of the ends (22, 23) of the supply section of the light guide (09) located opposite one another and/or at at least one of the ends (24, 25) of the out-coupling section of the light guide (08) located opposite one another.

9. The light guide or motor vehicle lamp as recited in one of the previous claims,
**characterised in that**
the light guide (01) is directly connected, preferably injection moulded, to one or more light sources (02), wherein in each case a surface of the light guide (01) that is immediately adjacent to a light source (02) is a light in-coupling surface (04).

10. The light guide or motor vehicle lamp as recited in one of the previous claims,
**characterised by**
LEDs (20) serving as light source (02), which LEDs emit light (05) of the same or of different colour.

11. The motor vehicle lamp as recited in one of the claims 2 to 10,
**characterised in that**:
- the light guide (01) is accommodated in the lamp interior (12) as a separate component or is part of a lighting means, and/or
- the lamp interior (12) has at least one reflector arranged behind the out-coupling section of the light guide (08) as seen from outside of the motor vehicle lamp through the light lens, and/or
- the bridge section (10) is at least partly guided and concealed behind the covering panel (13) arranged in the lamp interior (12), and/or
- the covering panel (13) has at least one opening (21) through which the at least one bridge section (10) is guided between the supply section of the light guide (09) and the out-coupling section of the light guide (08) of the light guide (01), and/or
- the covering panel (13) is designed to be two- or multi-part, wherein the covering panel (13) is preferably divided in the area of the opening (21), and/or
- the fastening of the light guide (01) between covering panel (13) and a lamp component is carried out behind the covering panel (13) in the area (15) that is not visible from outside of the motor vehicle lamp through the light lens, and/or
- the at least one light source (02) coupling its light (05) into the light guide (01) is arranged behind the covering panel (13), and/or
- the lamp interior (12) is divided into one or more lamp chambers associated with a common and/or with different light functions, of which light chambers at least one is equipped with a light guide (01) with a supply section of the light guide (09) and, running parallel thereto, an out-coupling section of the light guide (08) that is light-technically connected to said supply section of the light guide (09) by way of at least one bridge section (10), and/or
- the motor vehicle lamp is designed as a tail light.

## Revendications

1. Guide de lumière (01) comprenant au moins une zone de couplage de lumière (03) prévue pour coupler la lumière (05) d'au moins une source lumineuse (02), avec au moins une surface de couplage de lumière (04), ainsi qu'au moins une zone de découplage de lumière (06) prévue pour découpler la lumière couplée (05), avec au moins une surface de découplage de lumière (07) distincte de la surface de couplage de lumière (04), ainsi que, de plus, une section de guide de lumière de découplage (08), une section de guide de lumière d'introduction (09) espacée de celle-ci et s'étirant au moins le long de la longueur de la section de guide de lumière de découplage (08), ainsi qu'au moins une section passerelle (10) reliant l'une à l'autre, de manière efficace en termes de lumière, la section de guide de lumière de découplage (08) et la section de guide de lumière d'introduction (09) au moins le long de la longueur de la section de guide de lumière de découplage (08), et enjambant au moins partiellement l'espacement, le long de la longueur de la section de guide de lumière de découplage (08), entre celle-ci et la section de guide de lumière d'introduction (09), la section de guide de lumière d'introduction (09) comprenant au moins une zone de couplage de lumière (03) dotée d'au moins une surface de couplage de lumière (04) du guide de lumière (01), et la section de guide de lumière de découplage (09) comprenant une/des zone(s) de découplage de lumière (06) dotée(s) de la/les surface(s) de découplage de lumière (07) du guide de lumière (01), et la liaison lumineuse efficace créée par la/les section(s) passerelle (10) permettant de faire passer de manière continue sur la totalité de la longueur de la section de guide de lumière de découplage (09), de la lumière (05) sortant de la section de guide de lumière d'introduction (08) pour entrer dans la section de guide de lumière de découplage (09),
**caractérisé par**
un réglage de l'introduction de lumière sortant de la section de guide de lumière d'introduction (09) pour entrer dans la section de guide de lumière de découplage (08) par une variation :
- de la dimension (18) de la section passerelle (10) correspondant à un espacement au moins local entre la section de guide de lumière d'introduction (09) et la section de guide de lumière de découplage (08).

2. Phare de véhicule automobile doté d'un espace intérieur de phare (12) entouré d'un boîtier de phare et d'une glace de phare, lequel espace héberge au moins une ampoule dotée d'au moins une source lumineuse (02), au moins un guide de lumière (01) étant logé dans l'espace intérieur de phare, dans lequel guide de lumière (01) de la lumière d'au moins une source lumineuse (02) d'au moins une ampoule étant couplée à au moins une surface de couplage de lumière (04) d'au moins une zone de couplage de lumière (03) pour être ensuite découplée à au moins une surface de découplage de lumière (07), distincte de la surface de couplage de lumière (04), d'au moins une zone de découplage de lumière (06),
**caractérisé par**
un guide de lumière (01) selon la revendication 1, la section de guide de lumière d'introduction (09) étant conduite et cachée derrière une plaque d'obturation (13), ladite plaque d'obturation (13) divisant l'espace intérieur de phare (12) en une zone située, vu de l'extérieur du phare de véhicule automobile au travers de la glace de phare, devant la plaque d'obturation (13) et visible (14) et en une zone située derrière la plaque d'obturation (13) et non visible (15).

3. Guide de lumière ou phare de véhicule automobile selon la revendication 1 ou 2,
**caractérisé en ce**
**que** la section de guide de lumière d'introduction (09), la section de guide de lumière de découplage (08) et la/les section(s) passerelle (10) réalisée(s) d'un seul tenant avec la section de guide de lumière d'introduction (09) et la section de guide de lumière de découplage (08) et les reliant l'une à l'autre de manière efficace en termes de lumière, sont du même matériau ou sont fabriquées par moulage par injection en deux ou plusieurs étapes à partir de matériaux différents.

4. Guide de lumière ou phare de véhicule automobile selon l'une quelconque des revendications 1 à 3,
**caractérisé par**
une section passerelle continue (10) qui relie efficacement en termes de lumière et sur toute la longueur, du moins de la section de guide de lumière de découplage (08), celle-ci à la section de guide de lumière d'introduction (09).

5. Guide de lumière ou phare de véhicule automobile selon l'une quelconque des revendications précédentes, **caractérisé par**
un règlement supplémentaire de l'introduction de lumière sortant de la section de guide de lumière d'introduction (09) pour entrer dans la section de guide de lumière de découplage (08) par une variation :
- de la dimension (16) de la section passerelle (10) transversale à une surface (17) fixée entre la section de guide de lumière d'introduction (09) et la section de guide de lumière de découplage (08), et/ou
- de la forme et/ou du nombre et/ou des dimensions des prismes de surcouplage (19) agencés dans la section de guide de lumière d'introduction (09) et déviant, par le biais de la section passerelle (10) dans la section de guide de lumière de découplage (08), la lumière (05) propagée dans la section de guide de lumière d'introduction (09).

6. Guide de lumière ou phare de véhicule automobile selon l'une quelconque des revendications précédentes,
**caractérisé en ce**
**que** la section de guide de lumière d'introduction (09) et/ou la section passerelle (10) sont prévues pour fixer le guide de lumière (01).

7. Guide de lumière ou phare de véhicule automobile selon l'une quelconque des revendications précédentes,
**caractérisé en ce**
**que** plusieurs sources lumineuses (02) sont agencées le long de la section de guide de lumière d'introduction (09), de préférence réparties à intervalles réguliers.

8. Guide de lumière ou phare de véhicule automobile selon l'une quelconque des revendications précédentes,
**caractérisé par**
un couplage de lumière à au moins une des extrémités opposées (22, 23) de la section de guide de lumière d'introduction (09) et/ou à au moins une des extrémités opposées (24, 25) de la section de guide de lumière de découplage (08).

9. Guide de lumière ou phare de véhicule automobile selon l'une quelconque des revendications précédentes,
**caractérisé en ce**
**que** le guide de lumière (01) est relié directement à une ou plusieurs sources lumineuses (02), de préférence y est injecté, chaque surface du guide de lumière (01) directement adjacente à une source lumineuse (02) étant une surface de couplage de lumière (04).

10. Guide de lumière ou phare de véhicule automobile selon l'une quelconque des revendications précédentes, **caractérisé par** des DELs (20), en tant que source lumineuse (02), émettant de la lumière (05) de même couleur ou de couleur différente.

11. Phare de véhicule automobile selon l'une quelconque des revendications 2 à 10, **caractérisé en ce que** :
- le guide de lumière (01) est hébergé dans l'espace intérieur de phare (12) en tant qu'élément séparé ou fait partie d'une ampoule, et/ou
- l'espace intérieur de phare (12) présente au moins un réflecteur agencé, vu de l'extérieur du phare de véhicule automobile au travers de la glace de phare, derrière la section de guide de lumière de découplage (08), et/ou
- la section passerelle (10) est conduite et cachée au moins partiellement derrière la plaque d'obturation (13) agencée dans l'espace intérieur du phare (12), et/ou
- la plaque d'obturation (13) présente au moins un évidement (21) que traverse(nt) la/les section(s) passerelle (10) entre la section de guide de lumière d'introduction (09) et la section de guide de lumière de découplage (08) du guide de lumière (01), et/ou
- la plaque d'obturation (13) est réalisée en deux ou plusieurs pièces, cette plaque d'obturation (13) étant divisée de préférence au niveau de l'évidement (21), et/ou
- la fixation du guide de lumière (01) s'effectue entre la plaque d'obturation (13) et un composant de phare derrière la plaque d'obturation (13) dans la zone non visible (15) à partir de l'extérieur du phare de véhicule automobile au travers de la glace de phare, et/ou
- la/les source(s) lumineuse(s) (02) couplant sa/leur lumière (05) dans le guide de lumière (01) est/sont agencée(s) derrière la plaque d'obturation (13), et/ou
- l'espace intérieur de phare (12) est divisé en une ou plusieurs chambres de phare attribuée(s) à une fonction lumineuse commune ou à des fonctions lumineuses différentes, dont au moins une chambre de phare est équipée d'un guide de lumière (01) doté d'une section de guide de lumière d'introduction (09) et d'une section de guide de lumière de découplage (08) parallèle à la première et reliée à elle en termes de lumière par le biais d'au moins une section passerelle (10), et/ou
- le phare de véhicule automobile est conçu en tant que phare arrière.
